Europäisches Patentamt

European Patent Office

Office européen des brevets

(19)

(11) Veröffentlichungsnummer: **0 293 517 B1**

(12) **EUROPÄISCHE PATENTSCHRIFT**

(45) Veröffentlichungstag der Patentschrift: **25.11.92**

(51) Int. Cl.⁵: **G06F 15/31**

(21) Anmeldenummer: **87118741.5**

(22) Anmeldetag: **17.12.87**

Die Akte enthält technische Angaben, die nach dem Eingang der Anmeldung eingereicht wurden und die nicht in dieser Patentschrift enthalten sind.

(54) **Steuerprozessor.**

(30) Priorität: **02.06.87 EP 87107915**

(43) Veröffentlichungstag der Anmeldung:
**07.12.88 Patentblatt 88/49**

(45) Bekanntmachung des Hinweises auf die
Patenterteilung:
**25.11.92 Patentblatt 92/48**

(84) Benannte Vertragsstaaten:
**DE FR NL**

(56) Entgegenhaltungen:
**US-A- 3 775 756**
**US-A- 4 079 455**

**IBM JOURNAL OF RESEARCH AND DEVE-
LOPMENT, Band 29, Nr. 2, März 1985, Seiten
132-139, Armonk, New York, US; G. UNGER-
BOECK et al.: "Architecture of a digital signal processor"**

**ELECTRONIC DESIGN, Band 32, Nr. 10, 17.
Mai 1984, Seiten 213-222, Waseca, MN, Denville, NJ, US; J.H. DEDRICK: "Multiport register file simplifies and speeds digital signal
processing"**

(73) Patentinhaber: **Deutsche ITT Industries GmbH
Hans-Bunte-Strasse 19 Postfach 840
W-7800 Freiburg i.Br.(DE)**

(72) Erfinder: **Mehrgardt, Sönke, Dr. rer. nat.
Häglestrasse 26
W-7806 March-Neuershausen(DE)**
Erfinder: **Winterer, Martin, Dipl.-Phys.
Bundesstrasse 106
W-7803 Gundelfingen(DE)**

EP 0 293 517 B1

**MICROPROCESSORS AND MICROSYSTEMS,** Band 10, Nr. 4, Mai 1986, Seiten 202-210, Butterworh & Co. (Publishers) Ltd, London, GB; A. CLEMENTS: "Exception handling in the 68000, part 1"

**MICROPROCESSORS AND MICROSYSTEMS,** Band 10, Nr. 5, Juni 1986, Seiten 258-267, Butterworth & Co. (Publishers) Ltd, London, GB; A. CLEMENTS: "Exception handling in the 68000, part 2"

**HP-85 I/O PROGRAMMING GUIDE,** Hewlett Pa kard, Februar 1981, Seiten 65-74, Sektion 9, US; "End-of-line branching"

**COMPCON, SPRING 83, DIGEST OF PAPERS,** Seiten 278-285, IEEE, New York, US; T.R. GROSS: "Code optimization techniques for pipelined architectures"

**FUNKSCHAU,** Band 57, Nr. 22, Oktober 1985, Seiten 58-62, München, DE; M. SCHÜTZ: "So funktioniert der digitale Fernseher"

## Beschreibung

Die Erfindung betrifft einen monolithisch integrierten Steuerprozessor mit einer arithmetischen Logikeinheit (= ALU), die über Datenleitungen mit einem Datenspeicher verbunden ist. Ferner enthält der Steuerprozessor eine Steuereinheit, die über Steuerleitungen sowohl mit der ALU als auch mit dem Datenprozessor verbunden ist, um den Datenaustausch zwischen Datenspeicher und ALU und die Datenverarbeitung in der ALU zu steuern. Derartige Steuerprozessoren, die auch Mikroprozessoren genannten werden, enthalten für reine Steueraufgaben meist ein intern festliegendes Programm, das z.B. an eine Prozeßsteueraufgabe angepaßt ist. Ist das Programm jedoch veränderbar, was beispielsweise für die Anwendung in einem Rechner vorteilhaft ist, dann spricht man von einem Mikrocomputer.

Die Architektur derartiger Prozessoren erfolgt entweder nach der v. Neumann-Architektur, die für die Weiterleitung von Daten oder Befehlen gemeinsame Signalpfade oder Bus-Verbindungen verwendet, oder nach der sogenannten Harvard-Architektur, die getrennte Daten- und Steuerkanäle aufweist. Die letztere Architektur wird insbesondere dort verwendet, wo es auf hohe Bearbeitungsgeschwindigkeit ankommt, weil Daten und Instruktionen über jeweils eigene Busse nicht mehr nacheinander, sondern parallel weitergegeben werden.

Ein derartiger Steuerprozessor ist beispielsweise in "Elektronik", Heft 22, 5. November 1982, Seiten 139 bis 141 beschrieben. Es handelt sich dabei um einen 32-Bit-Hochleistungs-Mikrocomputer, der sich für die schnelle Signalverarbeitung eignet.

In US-A 4 079 455 ist die Architektur eines Mikroprozessors beschrieben, der eine schnelle Signalverarbeitung dadurch ermöglicht, daß zwischen den Datenspeicher und die ALU ein Zwischenspeicher eingefügt ist, der gleichzeitig über vier Ein/Ausgangsanschlüsse unabhängige Datenbewegungen ausführen kann, wobei über zwei Anschlüsse Daten gelesen und über zwei Anschlüsse Daten geschrieben werden können. Dadurch kann die ALU während eines Taktes mit zwei zu verarbeitenden Daten aus dem Zwischenspeicher gespeist werden, während gleichzeitig das Ergebnis des vorausgehenden Taktes im Zwischenspeicher aufgefangen wird. Durch diesen Zwischenspeicher mit den zugehörigen Datenverbindungen, vgl. den Oberbegriff des Anspruchs 1, wird die ALU von dem relativ langsamen Datenspeicher entkoppelt, wodurch die Verarbeitungsgeschwindigkeit erhöht wird.

Es ist Aufgabe der Erfindung, einen von einer Architektur gemäß US-A 4 079 455 ausgehenden Prozessor noch schneller zu machen. Zur Lösung wird eine Ergänzung der Prozessorstruktur vorgeschlagen, die eine gleichzeitige Behandlung sämtlicher arithmetischer Operationen und Steueraufgaben für den Datentransport vorsieht. Dies wird durch die Erweiterung des Viertor-Zwischenspeichers auf ein Fünftor-Zwischenspeicher und die zugehörigen Datenverbindungen ermöglicht.

Die geschwindigkeitssteigernde Pipeline-Technik bleibt bei Programmverzweigungen durch die Kombination der "verzögerten Verzweigung" mit bedingten oder nichtbedingten Skip-Befehlen auch bei großer Pipeline-Tiefe anwendbar, und die sonst übliche Interruptsteuerung ist durch eine Programmsegmentierung ersetzt, die eine Programmunterbrechung oder einen Sprung erst am Ende eines Segments zuläßt.

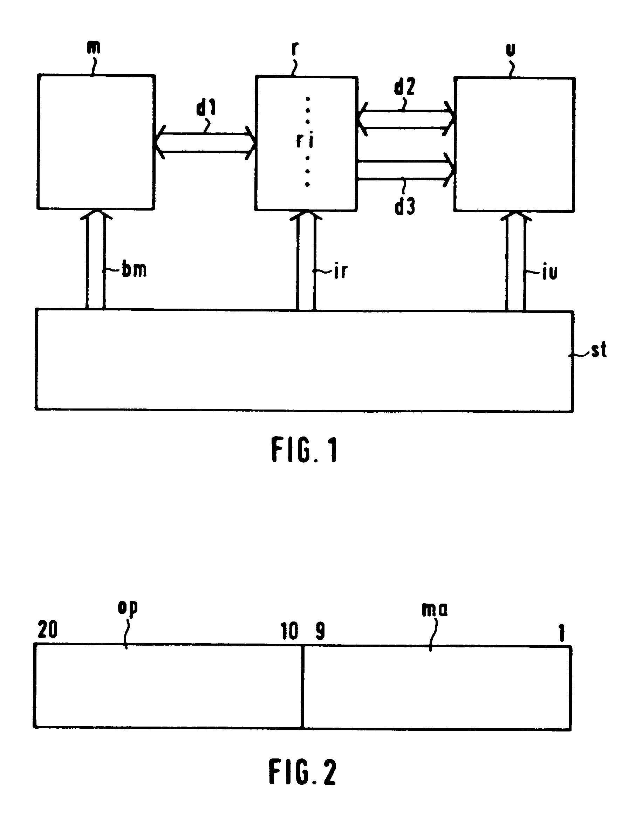

Der Zwischenspeicher ist das Kernstück des Prozessors. Der besseren Übersicht wegen soll zunächst die Datenbewegung über den Zwischenspeicher bei einer rein parallelen Signalverarbeitung, aber ohne Anwendung der Pipeline-Technik, dargestellt werden. Geht man z.B. von Zwei-Adreß-Operationen für die ALU sowie einer einzigen Datenbewegung zwischen dem Datenspeicher und dem Zwischenspeicher während einer Taktsignalperiode aus, so muß der Zwischenspeicher in einem Zyklus über drei Speicherzellen Daten bewegen, d.h.: eine Speicherzelle wird von der ALU nur gelesen, eine zweite wird von der ALU sowohl gelesen als auch geschrieben und schließlich wird eine dritte vom Datenspeicher aus entweder gelesen oder beschrieben. In diesem Fall ist als minimale Datenverbindung zwischen dem Datenspeicher und dem Zwischenspeicher ein bidirektionaler erster Datenbus und zwischen dem Zwischenspeicher und der ALU ein bidirektionaler zweiter Datenbus sowie ein dritter Datenbus erforderlich, wobei letzterer unidirektional den Zwischenspeicher mit der ALU verbindet, vgl. auch Fig. 1.

Eine hohe Verarbeitungsgeschwindigkeit sowohl in der ALU als auch im Datenspeicher und im Zwischenspeicher ist durch Anwendung der Pipeline-Technik ermöglicht. Dies erfordert indessen, daß die beiden bidirektionalen Datenbusse jeweils durch zwei gegensinnige unidirektionale Datenbusse ersetzt werden, weil dann im Extremfall pro Taktperiode fünf Speicherzellen für unabhängige Datenbewegungen benötigt werden, um eine Grundoperation zu bewältigen. Beispielsweise ist das Ergebnis einer Addition am ALU-Ausgang gegenüber dem Zeitpunkt der Dateneingabe mindestens um eine Taktperiode verschoben, so daß dieses Ergebnis nicht mehr in eine der beiden an der Dateneingabe beteiligten und damit mit der ALU verbundenen Speicherzellen einfach zurückgegeben werden kann. Das Lesen und Schreiben des Datenspeichers erfordert dann ebenfalls zwei Speicherzellen. Konflikte beim Registerzugriff werden entweder durch eine Entscheidungslogik oder durch geeignete Programmierung verhindert.

Untersuchungen mit einer Reihe von Programmen haben gezeigt, daß die Steuerung des Datentransports und die Steuerung der ALU im Mittel etwa die gleiche Anzahl von Operationen umfaßt. Die vorgeschlagene Architektur mit dem Zwischenspeicher bei gleichzeitiger Steuerung des gesamten Datentransports und der Datenverarbeitung in der ALU führt daher zu einer ausgewogenen Aufteilung der Rechnerkapazität und damit zu einer Steigerung der Verarbeitungsgeschwindigkeit bis zu einem Faktor 2.

Die Erfindung lehrt somit einen schnellen monolithisch integrierten Steuerprozessor ( = Fast Processor), der vorzugsweise in einem digitalen Fernsehsignalverarbeitungs-, Bildwiedergabe- und/oder Datenwiedergabe-Gerät weitgehend die Steuerungsfunktionen übernehmen kann.

An die Stelle einer relativ starren hardwaregebundenen Verarbeitung tritt bei dem Steuerprozessor nach der Erfindung ein anpassungsfähiges software-gesteuertes Schaltungskonzept zur Verarbeitung und Erzeugung sämtlicher Signale, die z.B. zur Synchronisation einer Kathodenstrahlröhre oder anderer Bildwiedergabegeräte benötigt werden. Über die reine Synchronisationsfunktion hinaus ist es dabei mit dem Steuerprozessor möglich, über geeignete Interface-Schaltungen die horizontale Ablenkspannung direkt zu erzeugen, so daß sich dieses System über ein entsprechendes Programm optimal an die jeweiligen Charakteristiken verschiedener Bildröhren oder sonstiger Wiedergabeeinrichtungen anpassen kann. Neue Ablenkkonzepte, wie z.B. die Sinusablenkung zur Flimmerunterdrückung, bei der sowohl während des sinusförmigen Zeilenhin- als auch des sinusförmigen Zeilenrücklaufs der Bildschirm beschrieben wird, sind ohne weiteres durchführbar. Auch die zur Steuerung der heute üblichen Schaltnetzteile erforderlichen Steuersignale lassen sich erzeugen.

Die Eingangssignale des Steuerprozessors entstammen verschiedenen Interfacesschaltungen, die externe, eventuell erst noch zu digitalisierende, Signale entsprechend vorbereiten, z.B. Abtrennung der Synchronsignale oder Begrenzung der Bild- und Zeilenrücklaufspannungsimpulse. Weitere, eventuell mit dem Steuerprozessor mitintegrierte Zusatzschaltungen übernehmen zusätzliche Aufgaben, wie z.B. ein digital gesteuerter Oszillator ( = DCO), der das hochfrequente Taktsystem für die digitale Signalverarbeitung erzeugt.

Folgende Anwendungsmöglichkeiten eines entsprechend erweiterten Steuerprozessors lassen sich unter anderem realisieren:
vertikale und horizontale Synchronimpulserzeugung,
Phasenverriegelungsschleifen mit umschaltbaren oder adaptiven Fang- und Halteeigenschaften, z.B. für die Zeilensynchronisation,
DCO-Ansteuerung, Berechnung der sägezahnförmigen Vertikalablenk-Spannungen oder -Ströme,
Berechnung der Ost-West und/oder Nord-Süd-Korrektur,
Berechnung der sägezahnförmigen oder andersartigen Horizontalablenk-Spannungen oder -Ströme, auch mit Korrekturen,
Erzeugung der Korrektursignale für die Fokusierung (dynamic focusing),
Erzeugung der verschiedenen Keyimpulse, Erzeugung des Ansteuerimpulses für den Horizontal- oder Vertikalrücklauf bei Transistor- oder Thyristorendstufen,
Phasenmessung zwischen Synchronimpuls und Zeilenrücklaufimpuls,
Ansteuersignale für ein Schaltnetzteil,
Normerkennung und Mehrnormbetrieb,
Gleichpegelklemmung des Videosignals,
Einstellung der vertikalen Bildhöhe und Bildlage.

Die meisten Signale können in Echtzeit vom Steuerprozessor berechnet und ausgegeben werden. Bei bestimmten Signalen, die nur gelegentlich berechnet werden müssen, kann es zweckmäßig sein, diese Signale direkt nach dem Netz-Einschalten oder jeweils nach einer Betriebsumschaltung einmalig zu berechnen und in einem RAM-Speicher abzulegen. Dieser dient zusammen mit einem Digital/Analog-Wandler (falls ein analoges Steuersignal erforderlich ist) als Steuersignalquelle für den weiteren Betrieb. Die Verwendung von ROM-Speichern ist ebenfalls möglich; dabei ist die Flexibilität jedoch eingeschränkt. Bei der Verwendung mehrerer Steuerprozessoren in einem Gerät ist eine weitere Leistungssteigerung möglich, indem z.B. gleichzeitig zusätzliche Funktionen wahrgenommen werden können.

Die Erfindung wird nun anhand der Figuren der Zeichnung näher erläutert:
Fig. 1 zeigt das vereinfachte Grundkonzept der erfindungsgemäßen Architektur mit dem Zwischenspeicher,
Fig. 2 zeigt schematisch einen im Programm enthaltenen Instruktionsbefehl und
Fig. 3 zeigt ein ausführlicheres Blockschaltbild des Steuerprozessors.

Fig. 1 zeigt das vereinfachte Blockschaltbild des Steuerprozessors. Die arithmetischen Operationen und die Datenbewegungen werden rein parallel , also ohne Anwendung der Pipeline-Technik, ausgeführt. Zwischen der ALU u und dem Datenspeicher m ist der Zwischenspeicher r eingefügt. Dieser kann von beiden Seiten, also sowohl vom Datenspeicher m über die erste bidirektionale Datenverbindung als auch von der ALU u aus über die zweite bidirektionale Datenverbindung, gleichzeitig gelesen oder geschrieben werden. Damit kann die ALU u dauernd in Betrieb gehalten werden, weil deren Eingangsdaten bzw. Ausgangsdaten gleichzeitig aus dem Zwischenspeicher r geholt bzw. darin abgelegt werden.

Die erste bidirektionale Datenverbindung wird durch den bidirektionalen ersten Datenbus d1 gebildet. Die zweite bidirektionale Datenverbindung wird durch den bidirektionalen zweiten Datenbus d2 und den unidirektionalen dritten Datenbus d3 gebildet, dessen Datenflußrichtung auf die ALU u weist.

Aus Geschwindigkeits- oder Aufwandsgründen kann es erforderlich sein, einen bidirektionalen Datenbus durch mindestens zwei gegensinnige unidirektionale Datenbusse zu ersetzen.

Der Ersatz der bidirektionalen Datenbusse durch jeweils mindestens zwei gegensinnig gerichtete unidirektionale Datenbusse ist ferner bei der Signalverarbeitung in Pipeline-Technik erforderlich. Denn die einzelnen Daten sind dabei je nach der Pipeline-Verarbeitungstiefe in einzelne Datenbereiche aufgeteilt, die zeitlich nacheinander in parallelen Verarbeitungszweigen verarbeitet werden. Entsprechend erfolgt der Datenaufruf dieser Datenbereiche und deren Ablage ebenfalls getrennt nacheinander, was selbstverständlich auch getrennte unidirektionale Datenbusse erfordert, da die beiden Datenbewegungen gleichzeitig, jedoch in entgegengesetzten Richtungen über die bidirektionale Datenverbindung ablaufen.

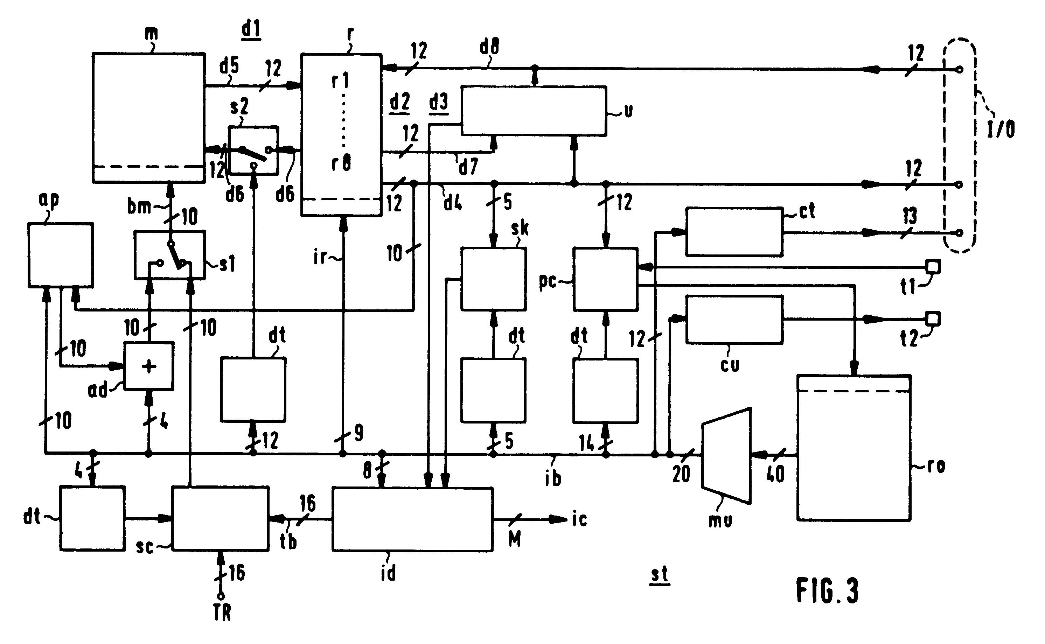

Um die Rechengeschwindigkeit weiter zu erhöhen, wird der Steuerprozessor bevorzugt mit einem reduzierten Instruktionssatz betrieben, wie er sich bei der Anwendung von RISC-Architekturen ergibt, wobei RISC die Abkürzung für Reduced Instruction Set Computer ist, was Computer mit eingeschränktem Befehlssatz bedeutet. Im Ausführungsbeispiel nach Fig. 3 besteht der Befehlssatz beispielsweise aus 32 einzelnen Befehlen im Gegensatz zu üblichen Strukturen, die bis zu 130 Befehle umfassen können.

Der reduzierte Befehlssatz ermöglicht in der ALU u bei zwei zugeführten Datenwörtern folgende Funktionen: Addition, Rechts/Links-Verschieben und als logische Funktion die Bildung der Konjunktion oder der Antivalenz aus den beiden zugeführten Daten. Da diese auch nach Belieben invertierbar sind, ermöglicht dieser Befehlssatz alle für einen Signalprozessor erforderlichen Signalverknüpfungen.

Der Zwischenspeicher r kann einige zusätzliche Speicherzellen enthalten, die der Aufnahme wiederzuverwendender Zwischenergebnisse oder häufig zu verwendender Konstanten dienen. Im Ausführungsbeispiel nach Fig.3 sind dies beispielsweise die drei zusätzlichen Speicherzellen r6, r7, r8, obwohl der Zwischenspeicher r nur mit fünf unidirektionalen Datenbussen d4 bis d8 verbunden ist. Dies erhöht ebenfalls die Rechengeschwindigkeit.

Eine zusätzliche Steigerung der Rechengeschwindigkeit ergibt sich, wenn die ALU u statt Zwei-Adress-Operationen Drei-Adress-Operationen ausführen würde. Ferner, wenn zwischen dem Datenspeicher und dem Zwischenspeicher in einer Taktperiode jeweils unabhängig voneinander zwei Datenbewegungen durchführbar wären, als Datenspeicher somit ein sogenannter Zweitor-Speicher vorläge. Durch beide Maßnahmen würde sich die Anzahl der minimal erforderlichen Speicherzellen ri und die Anzahl der zugehörigen Datenbusse weiter erhöhen.

Die Steuerung des Datenverkehrs und die Steuerung der Verknüpfungen in der ALU u wird durch die Steuereinheit st durchgeführt.

Diese ist über den Datenspeicher-Steuerbus bm mit dem Datenspeicher m, über den Zwischenspeicher-Steuerbus ir mit dem Zwischenspeicher r und über den ALU-Steuerbus iu mit der ALU u verbunden. Der Datenspeicher m enthält als Speicher einen RAM (= Schreib- und Lesespeicher) mit Adressendecoder und weiteren zugehörigen Schaltungen. Die Steuereinheit st enthält als Teil des Steuerwerks den Steuerwerkspeicher ro, einen ROM ( = Nur-Lesespeicher), der eine Liste von ca. 2000 Befehlen enthält, die in einzelne Segmente unterteilt sind.

Fig. 2 zeigt das zum Ausführungsbeispiel nach Fig. 1 gehörende Format eines im Steuerwerkspeicher ro abgespeicherten Befehlsworts. Die erste bis neunte Stelle geben dabei die Datenadresse ma im Datenspeicher m an, während die zehnte bis zwanzigste Stelle die zugehörigen ALU- und Steueroperationen op enthält. Bei der Bearbeitung eines Instruktionswortes werden innerhalb einer Taktsignalperiode gleichzeitig die zur Datenadresse ma gehörenden Datenbewegungen zwischen dem Datenspeicher m und dem Zwischenregister r und die ALU-und Steueroperationen op mit den zugehörigen Datenbewegungen zwischen ALU u und Zwischenregister r ausgeführt.

Die Signalverarbeitung in der Steuereinheit st erfolgt bevorzugt nach dem Prinzip der Pipeline-Technik. Probleme treten dabei erst auf, wenn das Programm nicht mehr kontinuierlich fortschreitet, sondern Verzweigungen enthält. Enthält das Programm z.B. in der Programmzählschleife von Fig. 3 einen Verzweigungsbefehl bei einer Pipeline-Tiefe von N, dann ändert sich der Programmfluß nach dem Multiplexer mu erst N Taktperioden später. Es ist daher üblich, eine entsprechende Anzahl von No-Operation-Befehlen in einen mehrere Taktperioden umfassenden Verzweigungsbefehl einzufügen. Damit wird aber eine Programmverzweigung oder ein Programmsprung zum Mehrzyklusbefehl. Dies läuft der Absicht zuwider, nur Ein-Zyklus-Befehle zu verwenden. Im Steuerprozessor ist daher bevorzugt die Methode des "verzögerten Sprungs" angewandt. Instruktionen, die nach einem Sprungbefehl noch in der Programmfolge stehen, werden dabei als sinnvolle Befehle noch ausgeführt, bis der Sprung tatsächlich erfolgt. Der Sprungbefehl ist in der Programmliste um die Anzahl von Befehlen, um die die tatsächliche Ausführung des Sprungs verzögert ist, nach oben versetzt. Damit wird die Programmsteuerung indessen jedoch sehr schwierig.

Daher wird bevorzugt auf die "Skip-Technik", eine Art Überspringungstechnik, die in vielen älteren Rechnern verwendet wurde, wieder zurückgegriffen. Hier erlaubt ein bedingter Skip-Befehl, daß der nächstfolgende Befehl ausgeführt oder unterdrückt wird. Diese Technik wird verwendet, um eine vorgegebene Anzahl von Befehlen zu überspringen. Auf den ersten Blick scheinen Skip-Befehle nichts anderes als kurze Verzweigungsbefehle in Vorwärtsrichtung zu sein; sie sind jedoch mit der Pipeline-Technik gut verträglich. Besonders vorteilhaft ist die Verwendung eines kompletten Satzes von bedingten oder nichtbedingten Skip-Befehlen zusammen mit der Technik der verzögerten Verzweigung für die Realisation der Programmsteuerung.

Eine andere Besonderheit des Steuerprozessors nach der Erfindung ist, daß er gegenüber vergleichbaren Schaltungen keine Interrupt-Steuerung enthält; trotzdem kann er relativ schnell auf äußere Programmanforderungen reagieren. Bei einer üblichen Interrupt-Steuerung ergibt sich als Antwort auf einen Interrupt-Befehl unmittelbar die Notwendigkeit, den internen Status des Prozessors zu sichern bzw. abzuspeichern. Im Falle des vorhandenen Zwischenspeichers r würde dies entweder zusätzliche Zeit kosten, alle Speicherzellen r1....r8 auszulesen und abzuspeichern oder es würde zusätzlichen Schaltungsaufwand erfordern, indem weitere Speicherzellen für die Interrupt-Daten vorzusehen wären.

Bei der Erfindung ist demgegenüber zur Ermöglichung einer vergleichbaren Interrupt-Funktion das Programm im Steuerwerksspeicher ro vorzugsweise in einzelne Segmente unterteilt. Während ein Segment der Reihe nach abgearbeitet wird, ist keine Unterbrechung möglich. Mit dem Ende eines Segmentes ist der Sprung auf den Anfang eines anderen Segmentes möglich. Die Entscheidung auf welches Segment gesprungen werden soll, ist Aufgabe des Schedulers sc (= Sprungadressengenerator), vgl. Fig. 3. Dieser Sprung ist auf der Grundlage der gespeicherten Sprungadressen möglich, die als Liste im Kopf des Datenspeichers m enthalten sind und beispielsweise 16 Sprungadressen für die einzelnen Segmentanfänge enthält.

Die Sprungadressen können durch den Scheduler sc mittels spezieller Befehle, die ihm von außen als unterschiedliche Programmanforderungen über die Task-Request-Anschlüsse TR zugeführt werden, oder intern über einen im Steuerwerkspeicher ro gespeicherten Programmbefehl aufgerufen werden. Über einen der beispielsweise 16 Task-Request-Anschlüsse TR kann dem Steuerprozessor somit mitgeteilt werden, welches von 16 möglichen Programmen als nächstes abgearbeitet werden soll, wobei in den Task-Request-Befehlen auch Test- oder andere Spezialroutinen enthalten sind, mit denen z.B. an sich unzugängliche Speicherinhalte von außen zugänglich werden. Die maximale Länge der Segmente bestimmt dabei die maximale äußere Ansprechzeit.

Fig. 3 zeigt ein ausführlicheres Beispiel des Steuerprozessors. Die Stellenzahl der Daten- oder Steuerbusse ist durch einen Schrägstrich auf der Leitung mit nebenstehender Zahl angegeben. Die Wortlänge der Ausgangsdaten und damit die Wortlänge im Datenspeicher m und Zwischenspeicher r beträgt 12 Bit. Von außen ist der Steuerprozessor über die I/O-Schnittstelle I/O sowie über die Task-Request-Anschlüsse TR zugänglich. Wie in Fig. 1 ist der Datenspeicher m, der Zwischenspeicher r und die ALU u mit den zugehörigen Datenbussen d1, d2, d3 zu erkennen. Die Steuereinheit st ist in einzelne Teilschaltungen aufgeteilt.

Die Taktsignalfrequenz des Steuerprozessors beträgt 40 MHz; damit der Steuerwerkspeicher ro aber mit der halben Taktfrequenz ausgelesen werden kann, werden gleichzeitig zwei aufeinanderfolgende Befehlsworte ausgelesen, wobei der nachgeschaltete Multiplexer mu daraus zwei aufeinanderfolgende, jeweils 20 Bit umfassende Instruktionsworte für den Instruktionsbus ib erzeugt vgl. Fig 2. Ein Teil davon, nämlich 9 Leitungen, steuern direkt als Zwischenspeicher-Steuerbus ir den Adressendecoder des Zwichenspeichers r.

Die Steuerung des Datenspeichers m erfolgt über den vom Datenspeicher-Steuerbus bm angesteuerte Adreßdecoder. Die 10 Leitungen des Datenspeicher-Steuerbusses bm sind die Ausgangsleitungen des ersten elektronischen Umschalters s1, dessen erster Buseingang mit dem zehnstelligen Ausgang des Addierers ad und dessen zweiter Buseingang mit dem zehnstelligen Ausgang des Schedulers sc verbunden ist.

Der eine Eingang des Addierers ad ist mit dem zehnstelligen Busausgang des Adressen-Wählers ap verbunden, und dem anderen Eingang sind vier Stellen des Instruktionsbusses ib als Eingangssignale zugeführt. Als Eingangssignale des Adressen-Wählers ap dienen 10 Stellen des Instruktionsbusses ib oder 10 Stellen des vierten Datenbusses d4, der dem zweiten oder dritten Datenbus d2, d3 von Fig. 1 zuzurechnen ist.

Die bidirektionale erste Datenleitung d1 von Fig. 1 ist in Fig. 3 durch die beiden gegenläufigen unidirektionalen Datenbusse, nämlich den fünften und sechsten Datenbus d5, d6 ersetzt, wobei in den sechsten Datenbus d6, der den Datenspeicher m speist, der zweite elektronische Umschalter s2 eingefügt ist, so daß statt der 12 Bit aus dem Zwischenspeicher r auch 12 Bit aus dem Instruktionsbus ib in den Datenspeicher m geschrieben werden können.

Die ALU u ist mit ihren beiden Dateneingängen über den vierten und siebten Datenbus d4, d7 mit dem Zwischenspeicher r verbunden, wobei der vierte Datenbus über die I/O-Schnittstelle I/O nach außen geführt ist. Der Ausgang der ALU u ist über den achten Datenbus d8 sowohl an die I/O-Schnittstelle I/O nach außen als auch an einen Dateneingang des Zwischenspeichers r geführt.

Über die I/O-Schnittstelle I/O und den achten Datenbus d8 können von außen Daten in den Zwischenspeicher r ohne Störung durch die ALU u eingegeben werden, während über den vierten Datenbus d4 Daten aus dem Zwischenspeicher r nach außen gelangen. Die jeweils zugehörigen Adressen werden an einem weiteren Anschluß der I/O-Schnittstelle I/O nach außen gegeben. Und zwar handelt es sich um 12 Stellen des Instruktionsbusses ib, die über die I/O-Steuerschaltung ct nach außen gelangen.

Die ALU u enthält ferner intern schaltbare Datenwege, die es auf vorteilhafte Weise ermöglichen, Ausgangsdaten der ALU direkt auf einen ihrer Eingänge zurückzugeben, z.B. beim fortlaufenden Akkumulieren. Dies vermeidet den sonst erforderlichen Umweg über das Zwischenregister r und umgeht dadurch die sonst als nachteilige Folge der Pipeline-Technik innerhalb des Zwischenregister-ALU-Verarbeitungszweiges auftretende Verzögerung.

Der an die I/O-Schnittstelle I/O angeschlossene vierte Datenbus d4 ist ferner an den Eingang des Skip-Zählers sk und den des Programmzählers pc geführt, wobei beiden Schaltungen als weitere Eingangsleitungen Teile des Instruktionsbusses ib über jeweils einen Verzögerungsausgleicher dt zugeführt sind.

Das Ausgangssignal des Programmzählers pc speist den Adressdecoder des Steuerwerkspeichers ro, und der Ausgang des Skip-Zählers einen ersten Eingang des Instruktionsdecoders id, dessen weiterer Eingang am Instruktionsbus ib liegt. Der Instruktionsdecoder id erzeugt M Steuersignale ic, beispielsweise die schaltungsbezogenen ALU-Befehle, welche eine Addition durchführen. Diese gehen dann über M einzelne Steuerleitungen an die einzelnen Schaltungsteile der ALU, z.B. Gatterstufen. Aber auch andere Schaltungsteile, wie z.B. der erste elektronische Umschalter s1 werden durch einen der M Steuersignalen ic gesteuert.

Der Instruktionsdecoder id erzeugt ferner über den 16-stelligen Tast-Request-Bus tp eigene Task-Request-Signale, die als solche dem Scheduler sc zugeführt sind. Damit ist das gewünschte Programmsegment auch vom Programm her wählbar. Da der Instruktionsdecoder id über einen dritten Eingang an die ALU u angeschlossen ist, kann das jeweils angeforderte Programmsegment auch noch von einer ALU-Operation gesteuert werden. An einem weiteren Eingang ist der Scheduler sc ist zudem über einen Verzögerungsausgleicher dt mit vier Stellen des Instruktionsbusses ib verbunden. Damit ergeben sich in praxi vielseitige Möglichkeiten für die Gestaltung besonders vorteilhafter Programme.

Für Testzwecke ist der Programmzähler pc durch einen ersten Testanschluß t1 von außen weiterschaltbar. Der Inhalt des Instruktionsbusses ib ist über den Parallel-Seriell-Wandler cu in serielle Daten umgewandelt, an einem zweiten Testanschluß t2 abgreifbar. Der Verarbeitungstakt des Steuerprozessors muß dabei allerdings stark, z.B. um den Faktor 20, herabgesetzt werden.

## Patentansprüche

1. Steuerprozessor mit
   - einer arithmetischen Logikeinheit (= ALU) (u),
   - einem Datenspeicher (m),
   - einem Zwischenspeicher (r), der zwischen die ALU (u) und den Datenspeicher (m) eingefügt ist, wobei der Zwischenspeicher gleichzeitig über mindestens zwei Ein- und zwei Ausgangsanschlüsse Daten austauschen kann,
   - einer ersten bzw. einer zweiten Datenverbindung, die den Zwischenspeicher (r) mit dem Datenspeicher (m) bzw. mit der ALU (u) verbindet, wobei die zweite Datenverbindung zwei unidirektionale in Richtung der ALU (u) weisende Datenbusse (d4, d7) und einen unidirektional in Richtung des Zwischenspeichers (r) weisenden Datenbus (d8) aufweist, der den Ausgang der ALU (u) mit dem Zwischenspeicher (r) verbindet, und
   - einer Steuereinheit (st), die mit dem Daten-Speicher (m) bzw. mit der ALU (u) bzw. mit dem Zwischenspeicher (r) über mindestens einen Datenspeicher-Steuerbus (bm) bzw. einen ALU-Steuerbus (iu) bzw. einen Zwischenspeicher-Steuerbus (ir) verbunden ist,
   gekennzeichnet durch folgende Merkmale:
   - die erste Datenverbindung enthält zwei unidirektionale Datenbusse (d5, d6), deren Richtungen einander entgegengesetzt sind,

- innerhalb der Periodendauer eines Taktsignals sind gleichzeitig mit der in Pipeline-Technik erfolgenden Datenverarbeitung der ALU (u) auf diesen fünf unidirektionalen Datenbussen (d4, d5, d6, d7, d8) Datenbewegungen durchführbar,
- der Zwischenspeicher (r) enthält über Adressen angesteuerte Speicherzellen (ri), die jeweils auf einen der fünf unidirektionalen Datenbusse (d4, d5, d6, d7, d8) wahlfrei durchgeschaltet sind und unabhängig voneinander gelesen oder geschrieben werden,
- die Steuereinheit (st) enthält einen Steuerwerksspeicher (ro), dessen Inhalt eine wortweise abrufbare Befehlsliste ist, wobei das während der Periodendauer des Taktsignals abgerufene Befehlswort sämtliche während der zugehörigen Periodendauer auszuführenden Datenbewegungs-, Steuer- und ALU-Operationsbefehle enthält,
- die Signalverarbeitung in der Steuereinheit (st) erfolgt in Pipeline-Technik,
- die Befehlsliste im Steuerwerksspeicher (ro) ist in Segmente unterteilt, wobei das jeweilige Segment ohne Interrupt-Möglichkeit abgearbeitet wird,
- ein Scheduler (sc) ermöglicht aufgrund eines Task-Request-Anschlusses (TR) oder eines einem Task-Request-Bus (tb) zugeführten Signals den Sprung am Ende eines Segments auf den Anfang eines beliebigen anderen Segments und
- in der Steuereinheit (st) ist die Technik der verzögerten Verzweigung zusammen mit bedingten oder nichtbedingten Skip-Befehlen verwendet.

2. Steuerprozessor nach Anspruch 1, dadurch gekennzeichnet, daß die ALU (u) mindestens folgende Funktionen bezüglich der zugeführten Daten aufweist:
- Addieren, Rechts/Links-Verschieben,
- logisches Verknüpfen in Form der Konjunktion oder Antivalenz und
- mindestens teilweises Invertieren der zugeführten Daten.

3. Steuerprozessor nach Anspruch 1 oder 2, dadurch gekennzeichnet, daß die ALU (u) mindestens einen schaltbaren direkten Datenbus von ihrem Ausgang auf einen ihrer Eingänge aufweist.

4. Verwendung eines Steuerprozessors nach einem der Ansprüche 1 bis 3 in einem digitalen Fernsehsignalverarbeitungs-, Bildwiedergabe- und/oder Datenwiedergabegerät.

**Claims**

1. A central processor comprising
- an arithmetic logic unit (= ALU) (u),
- a data memory (m),
- a buffer (r) interposed between the ALU (u) and the data memory (m), said buffer being capable of exchanging data simultaneously via at least two input terminals and two output terminals,
- a first data link and a second data link connecting the buffer (r) to the data memory (m) and the ALU (u), respectively, the second data link comprising two unidirectional data buses (d4, d7) in the direction of the ALU (u) and one unidirectional data bus (d8) in the direction of the buffer (r), the latter data bus (d8) connecting the output of the ALU (u) to the buffer (r), and
- a control unit (st) connected to the data memory (m), the ALU (u), and the buffer (r) by at least one data memory control bus (bm), one ALU control bus (iu), and one buffer control bus (ir), respectively, characterized by the following features:
- The first data link comprises at least two unidirectional data buses (d5, d6) whose directions are opposite to each other;
- during the period of a clock signal, data transfers can be carried out on said five unidirectional data buses (d4, d5, d6, d7, d8) simultaneously with the data processing in the ALU (u), which is performed using pipelining;
- the buffer (r) contains address-selected memory cells (ri) which are connected through on any of the five unidirectional data buses (d4, d5, d6, d7, d8) and are read from or written into independently of each other;
- the control unit (st) includes a control-unit memory (ro) which holds an instruction list fetchable word by word, with the instruction word fetched during the period of the clock signal containing all data-transfer, control, and ALU-operation instructions to be executed during the associated clock period;
- signal processing in the control unit (st) is done by pipelining;
- the instruction list in the control-unit memory (ro) is divided into segments, the respective segment being executed without an interrupt being possible;

- at the end of a segment, a scheduler (sc) permits a jump to the beginning of any other segment in response to a signal applied to it via a task request terminal (TR) or a task request bus (tb), and
- in the control unit (st), the delayed-branching technique is used together with conditional or unconditional skip instructions.

2. A central processor as claimed in claim 1, characterized in that the ALU (u) performs at least the following operations on the applied data:
   - addition, right/left shifting,
   - logic operations in the form of AND or exclusive-OR operations, and
   - at least partial inversion of the applied data.

3. A central processor as claimed in claim 1 or 2, characterized in that the ALU (u) has at least one switchable direct data bus from its output to one of its inputs.

4. Use of a central processor as claimed in any one of claims 1 to 3 in digital television-signal-processing, image-reproducing, and/or data-reproducing apparatus.

**Revendications**

1. Processeur de commande comprenant
   - une unité arithmétique et logique ou UAL (u),
   - une mémoire de données (m),
   - une mémoire intermédiaire (r) qui est intercalée entre l'UAL (u) et la mémoire de données (m), la mémoire intermédiaire pouvant échanger simultanément des données par l'intermédiaire d'au moins deux prises de raccordement d'entrée et de deux prises de raccordement de sortie,
   - une première ou une deuxième liaison de données qui relie la mémoire intermédiaire (r) à la mémoire de données (m) ou à l'UAL (u), la deuxième liaison de données présentant deux bus unidirectionnels de données (d4, d7) orientés en direction de l'UAL (u) et un bus unidirectionnel de données (d8) orienté en direction de la mémoire intermédiaire (r) qui relie la sortie de l'UAL (u) à la mémoire intermédiaire (r), et
   - une unité de commande (st) qui est reliée à la mémoire de données (m) ou à l'UAL (u) ou à la mémoire intermédiaire (r) par l'intermédiaire d'au moins un bus de commande de mémoire de données (bm) ou d'un bus de commande d'UAL (iu) ou d'un bus de commande de mémoire intermédiaire (id),
   caractérisé en ce que
   - la première liaison de données contient deux bus unidirectionnels de données (d5, d6) dont les directions sont opposées l'une à l'autre,
   - dans la durée de période d'un signal d'horloge, des déplacements de données peuvent être réalisés simultanément au moyen du traitement de données par l'UAL (u) résultant de la technique du pipeline par l'intermédiaire de ces cinq bus unidirectionnels de données (d4, d5, d6, d7, d8),
   - la mémoire intermédiaire (r) comprend des cellules de mémoire (ri), commandées par l'intermédiaire d'adresses, qui sont reliées chacune à volonté à l'un des cinq bus unidirectionnels de données (d4, d5, d6, d7, d8) et peuvent être lues ou écrites indépendamment l'une de l'autre,
   - l'unité de commande (st) comprend une mémoire de travail de commande (ro) dont le contenu est une liste d'instructions pouvant être appelées mot par mot, le mot d'instruction appelé pendant la durée de période du signal d'horloge contenant toutes les instructions de déplacement de données, de commande et d'opération de l'UAL à exécuter pendant la durée de période correspondante,
   - le traitement de signal dans l'unité de commande (st) est exécuté selon la technique du pipeline,
   - la liste d'instructions dans la mémoire de travail de commande (ro) est subdivisée en segments, chaque segment pouvant être traité sans possibilité d'interruption,
   - un générateur d'adresses de saut (sc) permet, au moyen d'une prise de raccordement pour requête de tâche (TR) ou d'un signal envoyé au bus de requête de tâche (tb), le saut à la fin d'un segment vers le début d'un quelconque autre segment, et
   - dans l'unité de commande (st), la technique du branchement retardé est utilisée en combinaison avec des instructions de saut conditionnel ou inconditionnel.

2. Processeur de commande selon la revendication 1, caractérisé en ce que l'UAL (u) présente au moins les fonctions suivantes relativement aux données qui y sont envoyées :
- addition, décalage à droite et à gauche,
- combinaison logique sous forme de conjonction ou d'anticoïncidence,
- au moins inversion partielle des données introduites.

3. Processeur de commande selon la revendication 1 ou 2, caractérisé en ce que l'UAL (u) présente au moins un bus direct de données commutable de sa sortie à une de ses entrées.

4. Utilisation d'un processeur de commande selon une quelconque des revendications 1 à 3 dans un appareil de traitement des signaux de télévision, de reproduction d'images et/ou de reproduction de données.

FIG. 1

FIG. 2

FIG.3

EP 0 293 517 B1